(19) **Europäisches Patentamt**

**European Patent Office**

**Office européen des brevets**

(11) **EP 1 013 357 A1**

(12) **EUROPEAN PATENT APPLICATION**
published in accordance with Art. 158(3) EPC

(43) Date of publication:
28.06.2000 Bulletin 2000/26

(51) Int. Cl.[7]: **B21J 1/06**

(21) Application number: **98936688.5**

(86) International application number:
**PCT/JP98/03517**

(22) Date of filing: **07.08.1998**

(87) International publication number:
**WO 99/07497 (18.02.1999 Gazette 1999/07)**

(84) Designated Contracting States:
**AT BE CH DE DK ES FI FR GB GR IT LI NL PT SE**

(30) Priority: **08.08.1997 JP 22717097**

(71) Applicant: **TOTO LTD.**
**Kitakyushu-shi, Fukuoka-ken 802-8601 (JP)**

(72) Inventors:
• **NAKAMURA, Katsuaki,**
**Toto Ltd.**
**Kita-kyusyu-shi, Fukuoka 802-8601 (JP)**

• **YOSHIJIMA, Tadashi,**
**Toto Ltd**
**Kita-kyusyu-shi, Fukuoka 802-8601 (JP)**
• **YAMAUCHI, Atsushi,**
**Toto Ltd**
**Kita-kyusyu-shi, Fukuoka 802-8601 (JP)**
• **SUGIMOTO, Ryoichi,**
**Toto Ltd**
**Kita-kyusyu-shi, Fukuoka 802-8601 (JP)**

(74) Representative: **HOFFMANN - EITLE**
**Patent- und Rechtsanwälte**
**Arabellastrasse 4**
**81925 München (DE)**

(54) **FULL ENCLOSED DIE FORGING METHOD, FULL ENCLOSED DIE FORGING APPARATUS, AND PRODUCT OF FORGING**

(57) A full enclosed die forging method utilizes a forging material which comprises crystal grains of different phases and whose recrystallization temperature is T1 and whose melting point is T2. And, while the forging material is enclosed in a die, the forging is carried out by a punch to the forging material in a temperature range not less than T1 and not higher than (T1+T2)/2 . Thus, the dynamic recrystallization is promoted to be able to obtain complicated shaped products with high plastic workability.

*FIG.8*

## Description

Technical field

This invention relates to a full enclosed die forging method and a full enclosed die forging apparatus for producing faucet fittings, household electric appliances, mechanical members and the like by forging, and forged products.

Background Art

For producing such kind of faucet fittings using Cu-Zn based copper alloy, hot forging methods in the temperature range of 650 to 850 °C are conventionally proposed (Japanese Laid-open Patent Publication No.Sho54(1979)-158359 and Japanese Examined Patent Publication No.Sho58(1983)-39014).

However, high dimensional accuracy cannot be obtained through hot forging in such temperature range. Moreover, there is a problem for the die to be exposed to high temperatures so that the life of the die may be shortened.

On the other hand, cold forging in a temperature range under the recrystallization temperature (300°C) of Cu-Zn based copper alloy is also examined. However, through cold forging, it is not possible to forge at a large plastic working rate, and there is a problem such that degree of forming flexibility of is poor.

To avoid these problems, it is also examined to carry out forging in a higher temperature beyond the recrystallization temperature. However, in use of Cu-Zn based copper alloy, there is the brittle temperature range between 350 and 450°C so that it is difficult to control working conditions to avoid such brittleness.

Disclosure of the invention

The first invention, in order to solve the above-mentioned problems, is characterized by using a forging material which comprises crystal grains of different phases, and by enclosing the above-mentioned forging material in a die and carrying out forging by a punch to the forging material in the temperature range not lower than T1 and not higher than $(T1+T2)/2$ , where recrystallization temperature of the material is T1 and melting point is T2.

The full enclosed die forging method according to this invention carries out forging, using a forging material comprising crystal grains of different phases, in the condition that this forging material is enclosed within a die. That is, a full enclosed die forging method is a method for producing a particular shape, by forging the material while restricting the material flow by a die. At this occasion, when the recrystallization temperature of the forging material is T1 and the melting point thereof is T2, the forging material is forged in the temperature range not lower than T1 and not higher than $(T1+T2)/2$ . When the forging material is forged in such temperature range, the dynamic recrystallization by strain energy is promoted in addition to the recrystallization by thermal energy. Such recrystallization improves workability, since each the particle sizes of different phases of the forging material becomes finer.

Accordingly, the forging temperature is lower than that hot forgings, so that dimensional accuracy close to a final product can be obtained, and the temperature of the die also lowers so that the life of the die can be lengthened. On the other hand, in comparison with cold forgings carried out at a temperature under the recrystallization temperature, the forging at a large plastic working rate is possible so that the product of the complicated shape can be also easily produced, and in short, degree of forming flexibility is high.

Accordingly, the first invention simultaneously solves two problems, one of which is that the plastic working rate cannot be increased by cold forging, carried out in temperature range under the recrystallization temperature, and another is that the dimensional accuracy is difficult to be obtained by hot forging, carried out in temperature range of melting point (-300 °C) to near melting point. In another words, by forging in a temperature range between the above both to utilize dynamic recrystallization, dimensional accuracy becomes higher, and producing complicated shaped products is also possible.

Here, it is preferable that the temperature change of the above-mentioned die is controlled within ±100 degrees in one cycle the above-mentioned forgings is produced. That is, in the full enclosed forging method, employing a constant temperature processing, in which the temperature change of the die is narrowed within ±100°C in one cycle, will cause less damage (heat check) due to the thermal cycle, and the life of the die can be lengthened.

Also, constant temperature processing allows the plastic working speed to be slowered in comparison with cold forging, and forging by such slow plastic working speed make it possible to increase plastic working rate of the forging material, and the degree of forming flexibility can be enhanced. Means for maintaining the die temperature constant may include means of ventilation and means of supplying the channel buried in the die with cold water to balance a heat amount in heating forging material with a heat amount which arises in the forging, and control means of heating with a heater and the like.

A suitable material as a forging material may be the alloy comprising crystal grains of different phases, for example, Cu-Zn based copper alloy can be used. Here, in the case of a Cu-Zn based copper alloy, Cu is 54 to 62 wt.%,

or 38 to 46 wt. % in the conversion Zn content, is preferably used. That is because, the above forging material is excellent in ductility in this range, and it is possible to carry out forging, in which the plastic working rate is high, by effectively utilizing the dynamic recrystallization. Here, the conversion Zn content is a value calculated by the following equations.

$$\text{The conversion Zn content} = \text{Zn content (wt. \%)} + \text{additive elements content (wt. \%)} \times \text{Zn equivalent of additive elements} \quad (1)$$

The Zn equivalent of additive elements means a value of numeral expression to show how many times the effect, in which the additive elements, except for zinc, affects the brass organization, corresponding to the effect in which Zn dose. For example, there are Sn(2.0), Al(6.0), Si(10.0), Fe(0.9), Mn(0.5), Ni(-1.3), Mg(2.0), Pb(1.0).

As a property of the forging material, the material of 15 $\mu$ m or less average crystalline particle diameter of crystal grains is used, so that the contact area of crystal grains of different phases increases, and the dynamic recrystallization in the forging can be promoted to obtain high plastic working rate. Here, it is preferable that the average crystalline particle diameter is as small as possibly produced.

When brass is used as the above-mentioned forging material, the different phases preferably contain $\alpha$ phase - $\beta$ phase and the ratio of $\beta$ phase is 30 to 80%. This is based on the following reasons. Since $\beta$ phase has a softer property than $\alpha$ phase, when the ratio of $\beta$ phase is in the range of 30 to 80 %, the dynamic recrystallization of soft $\beta$ phase is promoted by hard $\alpha$ phase to heighten the plastic working rate. The ratio mentioned here means the area ratio of $\alpha$ phase and $\beta$ phase.

The moving speed, at which forging is carried out for forging material by a punch, is not especially limited, as long as damage is not caused to the forging material. However, it is preferable that the moving speed is at 50 mm /second or less. That is because, when the moving speed is set at 50 mm /second or less, the strain rate of forging material is small, so that by using the dynamic recrystallization, forging can be carried out without causing damage to the forging material.

The products produced by the full enclosed forging apparatus, though it is not especially limited, for example, when the copper alloy is used, include a valve, a faucet fitting, a sanitary ware fitting, various joints, a pipe, a gas apparatus, a building materials such as a door and a knob, a household electric appliance and the like where copper alloy has been conventionally used. It can be also applied to products using non copper alloy material by reasons such as surface roughness, corrosion resistance, and dimensional accuracy. In this case, the plastic working rate is high so that it can be also applied to a product of complicated shape like a hollow cylinder.

The moving speed at which the punch moves for forging the material may be set not only constant, but also at variable. For example, in such a case that the speed is set variable so that the punch moves at a low speed for the beginning and afterwards it moves fast, the punch does not give a heavy impact on the forging material. Thus, a part in which the distortion rate is high in the edge of the forging material is not produced and it is possible to prevent defects such as cracks.

In addition to use of a single punch, forging may be carried out by driving multiple punches from respectively different directions in a predetermined order. For example, while one punch is driving, other punch may wait in order to restrict the forging material without moving. Thus, the full enclosed state of forging material is enhanced, so that it is possible to also forge the product of a complicated shape with a small force.

The second invention is a full enclosed forging apparatus, wherein a forging material which comprises crystal grains of different phases and whose recrystallization temperature is T1 and whose melting point is T2 is enclosed in the die, provided with punch driving means for carrying out forging by the punch to the forging material, and provided with temperature control means for controlling the temperature change of the forging material between T1 and (T1+T2)/2 .

In the full enclosed forging apparatus according to the second invention, by providing with a die temperature control means or a punch driving means, the first invention can suitably be realized.

The third invention is a forged products, that is formed through forging to a forging material, which comprises crystal grains of different phases in the forging temperature and whose recrystallization temperature is T1 and whose melting point is T2, and the material is forged by a punch enclosed in the die within a temperature range between T1 and (T1+T2)/2 .

The forged products according to the third invention, by using the full enclosed die forging method according to the first invention and the full enclosed die forging apparatus according to the second invention, is accurate in dimensional accuracy which is close to a final product, and in addition, because it is forged at a large plastic working rate, a product of the complicated shape is easily obtained.

That is, whether a forged products has been produced passing through the first or the second invention or not is easily guessed by confirming whether or not its dimensional accuracy is higher than the conventional forging and whether or not its shape is complicated shape.

As these products of forging, by using the brass of a composition of 54 to 62 wt. % Cu or 38 to 46 wt. % conversion Zn content, the crystal structure of the products including α phase - β phase at the temperature during forging, with the β phase ration between 30 % and 80%, can be obtained.

The average crystalline particle diameter of forging material is suitably 15 μm or less in the forging temperature, it can be easily estimated if the average crystalline particle diameter of the forged products is 15 μm or less.

Brief Description of the Drawings

Fig.1 is a perspective view of a faucet fitting body 10 produced by a full enclosed die forging method according to one embodiment of this invention.
Fig.2 is a sectional view of the faucet fitting body 10.
Fig.3 is an explanatory view of a full enclosed forging die 12.
Fig.4 is an explanatory drawing of component, phase ratio, and average crystalline particle diameter of Cu-Zn based copper alloy.
Fig.5 is a sectional view of the full enclosed forging die 12 in clamped state.
Fig.6 is a timing chart of clamping of the full enclosed die and stroke of punches 15a, 15b, and 15c.
Fig.7 is an explanatory view of the full enclosed forging die 12 just before forging.
Fig.8 is an explanatory view of the state in which bottomed holes 10a and 10b are formed by pushing and moving punches 15a and 15b toward the center of a bar member 10A.
Fig.9 is an explanatory view of the state in which a bottomed hole 10c is formed by pushing and moving a punch 15c toward the center of a bar member 10A.
Fig.10 is a two-dimensional equilibrium state diagram of Cu-Zn based copper alloy.
Fig.11 is a schematic view of the state in the mixing phase of α phase and β phase.
Fig.12 is a schematic configuration view of a full enclosed die forging apparatus 20 for driving and controlling the full enclosed forging die 12.

The preferred embodiment for carrying out the invention

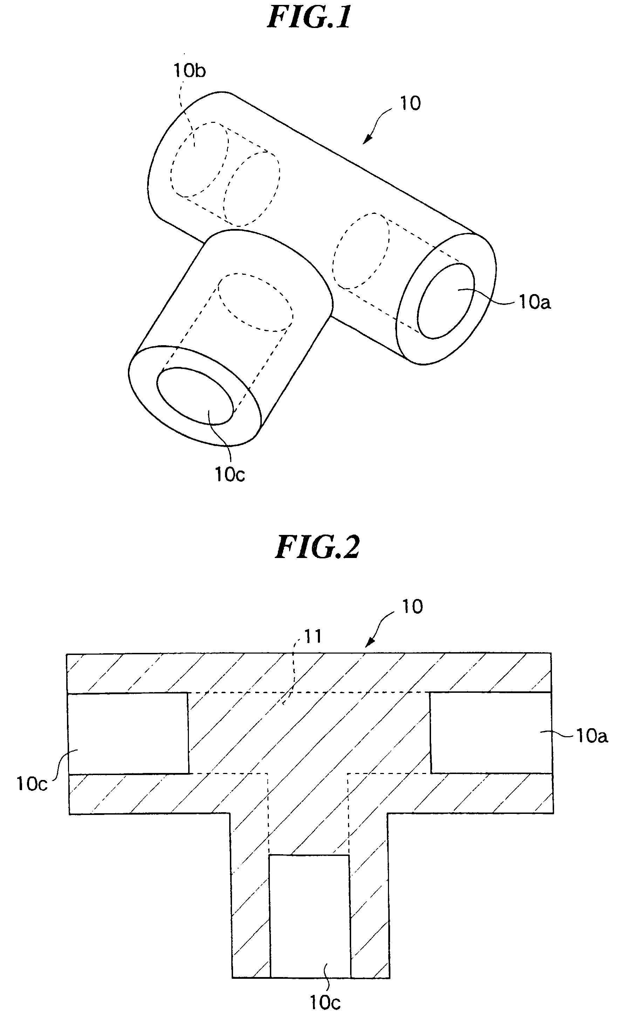

In the following, an embodiment of this invention will be explained referring to the drawings. Fig.1 shows a perspective view of the faucet fitting body 10 produced by the full enclosed die forging method according to one embodiment of this invention, and Fig.2 shows a sectional view of the faucet fitting body 10.

The faucet fitting body 10 is a member constituting one part of a faucet fitting and being formed T-shaped. From the both ends of this body 10 toward the center thereof, the bottomed holes 10a and 10b are formed, and further a bottomed hole 10c is formed perpendicularly to the bottomed holes 10a and 10b. This body 10 is machined in the axis direction from the bottomed holes 10a and 10b, and in addition, it is machined in the central direction from the bottomed hole 10c, so that a channel is formed by machining the center axis part 11.

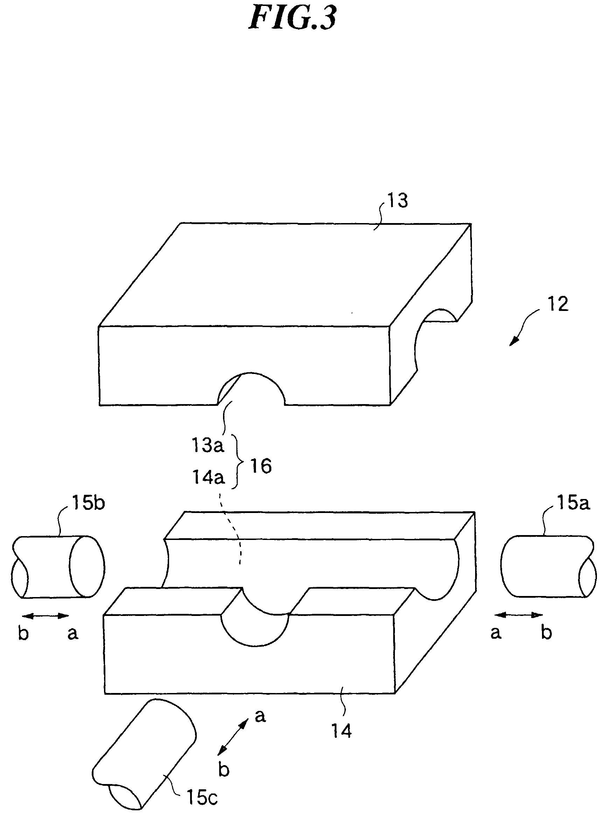

Next, the body 10 is produced by forming a bar made of brass using the full enclosed die forging method, which is carried out using the full enclosed forging die 12 shown in Fig.3. In Fig.3, the full enclosed forging die 12 is provided with an upper die member 13, a lower die member 14, and punches 15a, 15b, and 15c that are driven by the full enclosed die forging apparatus 20 mentioned-below. In the upper die member 13 and the lower die member 14, a concave places 13a and 14a are formed respectively, the concave places 13a and 14a define a cavity 16 when the upper die member 13 and the lower die member 14 are clamped.

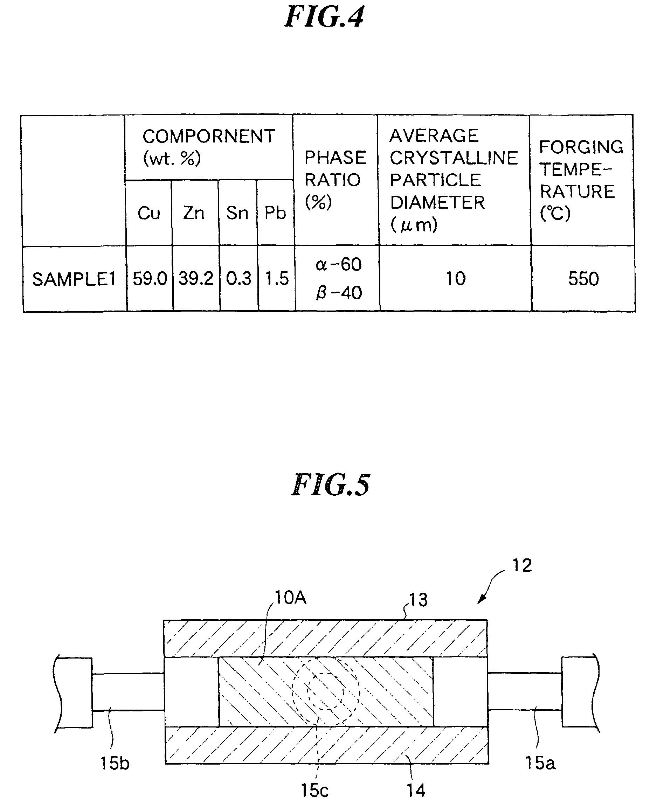

Next, a series of processes in which the body 10 is produced by the full enclosed die forging method is explained. First, using a brass having component, phase ratio, and average crystalline particle diameter shown Fig.4, a bar 10A is produced through extrusion. This bar 10A is heated at 500 °C for 25 minutes. In this heating, time and temperature are adjusted so as to prevent crystal grains from coarsening.

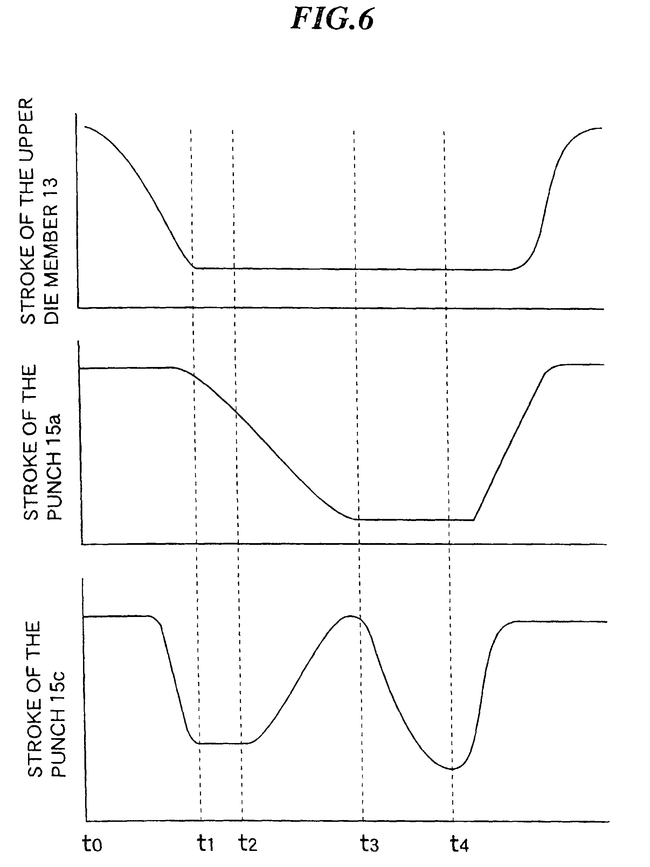

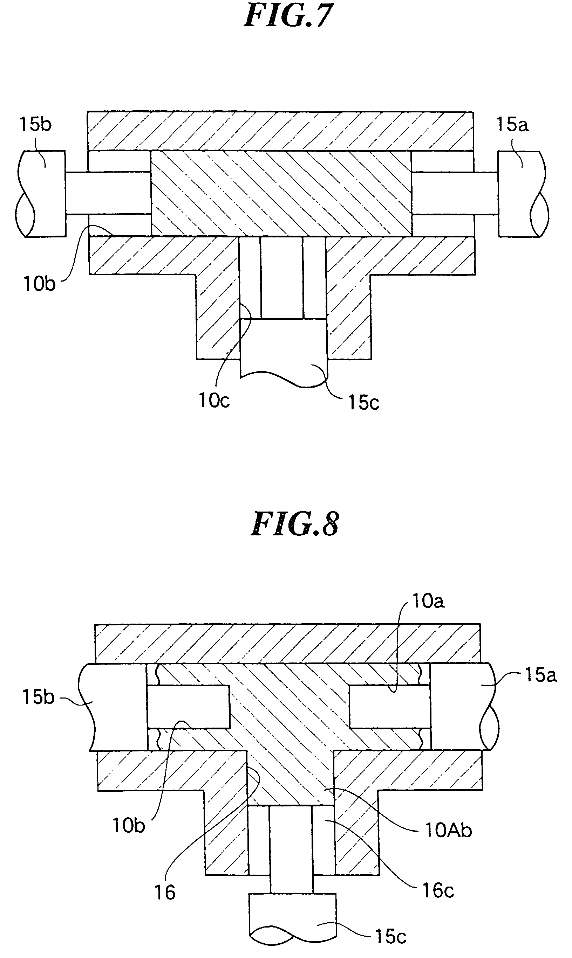

Next, the lower die member 14 and the upper die member 13 of the full enclosed forging die 12 is preheated until 500 °C. Continuingly, the heated bar 10A set on the concave place 14a of the lower die member 14, the full enclosed forging die 12 is clamped (the state shown at Fig.5). Fig.5 is a sectional view of full enclosed forging die 12 in clamped state. Continuingly, by driving punches 15a, 15b, and 15c, forging for the bar material 10 A is carried out. Fig.6 is a timing chart of clamping of full enclosed die and stroke of punches 15a, 15b, and 15c, Fig.7 to 9 show the state of the full enclosed forging die 12 at that time.

First, the bar 10 A is full-enclosed by lowering the upper die member 13 to clamp the lower die member 14 and the upper die member 13(point of time t0 to t2). At the point of time t1 to t2 in the period, while the punches 15a and 15b are moved in the forward direction " a " to meet the both ends of the bar 10 A respectively, at the later of the point of time t0 to t1, the punch 15c is moved in the forward direction " a " to meet the side of the bar 10 A (the state shown at Fig.7).

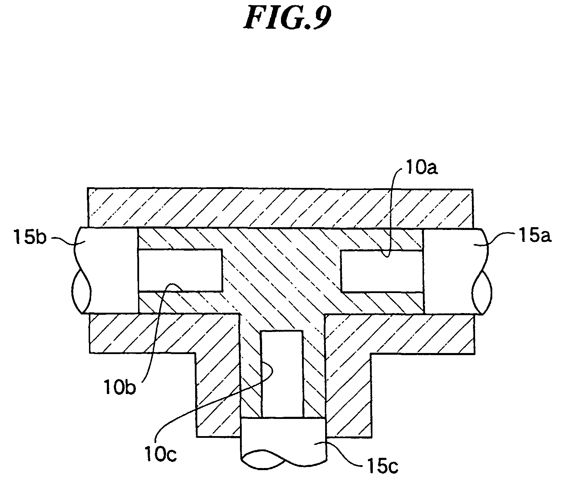

Continuingly, as shown at Fig.8, by pressing and moving the punches 10a and 10b toward the center of the bar 10A, the bottomed holes 10a and 10b are formed. A material of the bar 10A pushed by forming the bottomed holes 10a and 10b, flows to an opening 16c of the cavity 16, and pushes the punch 15c back, thus a protrusion 10Ab is formed. At that time, the punch 15c is inserted in the opening 16c to meet the side area of the bar 10A so that it is pushed out by flowed material of the bar 10A (point of time t2 to t3). Then, the punch 15c is moved upwardly in the figure (point of time t3 to t4). At that time, since both ends of the bar 10A are enclosed by pushing the punches 15a and 15b respectively, the bottomed hole 10c is formed in the protrusion 10Ab of the bar 10A (the state shown at Fig.9).

And, after point of time t4, the punches 15a, 15b, and 15c are moved in the direction " b " sequentially, and the upper die member 13 is raised to open, a series of processes end.

Next, properties of Cu-Zn based cupper alloy used in the above-mentioned full enclosed die forging method and characteristic processes for the full enclosed die forging, will be explained. The full enclosed die forging method is a method for forming a forming material of Cu-Zn based cupper alloy comprising mixing phases of $\alpha$ phase and $\beta$ phase, and enclosed forging using full enclosed forging die 12 is carried out at a fixed temperature condition. Thus, by utilizing the dynamic recrystallization of a forging material, the material is formed at a large plastic working rate. Here, the dynamic recrystallization means that in the material in which $\alpha$ phase has mixed with $\beta$ phase, when deformation load is applied, a plastic deformation permission region is formed surrounding $\alpha$ phase, and the plastic deformation permission region recrystallizes, by strain energy and thermal energy, to be reproduced as a new crystal. By this dynamic recrystallization, the strain eases and is eliminated so that it is possible for crystal grains to receive new deformation. Such dynamic recrystallization promotes further fining of $\alpha$ phase and $\beta$ phase grains particle sizes to improve workability. Conditions for utilizing the dynamic recrystallization will be explained in the following.

(1) The property of Cu-Zn based copper alloy.

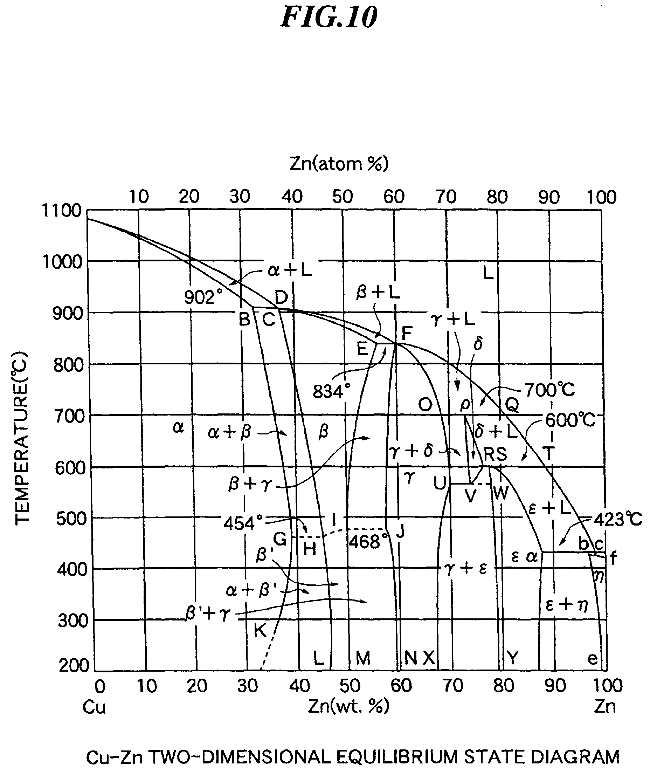

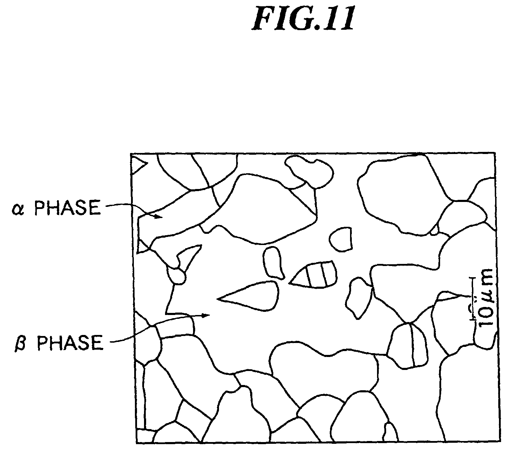

Fig.10 is a two-dimensional equilibrium state diagram of the Cu-Zn based copper alloy. As shown Fig.4, the forging material according to an embodiment of this invention uses the mixed phase of $\alpha$ phase and $\beta$ phase. Fig.11 is a schematic view of the state in the mixed phase of $\alpha$ phase and $\beta$ phase. Here, the ratio of $\alpha$ phase and $\beta$ phase is adjusted so that $\beta$ phase is in the range of 30 to 80 %. Making such adjustment to the ratio of $\alpha$ phase and $\beta$ phase in this range is based on following reasons. Since $\beta$ phase has a property being softer than $\alpha$ phase, harder $\alpha$ phase permits to promote the dynamic recrystallization of softer $\beta$ phase so that the plastic working rate may be enhanced. So, if $\beta$ phase is 30% or less, the plastic deformation permission region as a factor of the dynamic recrystallization decreases and there is no ductility in the forging material itself. On the other hand, if $\beta$ phase is more than 80%, $\alpha$ phase decreases and the dynamic recrystallization is difficult to be generated, so that the ratio of $\beta$ phase in the forging material is preferably in the range of 30 to 80%.

To make such ratio of a phase and $\beta$ phase, shown in an equilibrium state diagram of Fig.10, it is necessary to use the brass of Cu 54 to 62 wt. %, in the conversion Zn content 38 to 46 wt.%. Here, the conversion Zn content in the brass shown at Fig.4 is 41.4 wt. % (= 39.2+0.3×2+1.5×1).

And, the average particle size of Cu-Zn based copper alloy is preferably 15 $\mu$m or less. This is based on following reasons. In the forging material comprising the mixing phase of $\alpha$ phase and $\beta$ phase, soft $\beta$ phase is deformed by hard $\alpha$ phase to form the plastic deformation permission region around $\alpha$ phase, the width of the plastic deformation permission region is almost fixed independent of the size of $\alpha$ phase. In short, since a plastic deformation permission region per one crystal grain is almost fixed, in the case in which the ratio of $\alpha$ phase and $\beta$ phase dose not change, crystal grains of $\alpha$ phase and $\beta$ phase become small, those contact area increases and the plastic deformation permission region increases to promote the dynamic recrystallization during forging. The average crystalline particle diameter is preferably small as possibly as it can be produced, however, it is difficult to make the average crystalline particle diameter finer in production process. However, if it is 1 to 10 $\mu$ m, sufficient ductility can be obtained.

The crystal of Cu-Zn based copper alloy, by adding Sn as an additive element and controlling the cooling ratio after forging, may form $\gamma$ phase of 3 to 30 wt. % besides $\alpha$ phase and $\beta$ phase after cooling, so that it will be excellent in mechanical strength and machining, polishing ability, and may be improved in corrosion resistance, dezinking, SCC resistance, and corrosion resistance.

(2) The temperature condition on forging

The temperature of the forging material during forging is in a range of 300 to 600 °C. The reason for carrying out forging in a temperature over 300 °C is because, for Cu-Zn based copper alloy having above-mentioned composition, a temperature of 300 °C is recrystallization temperature so that it is necessary to carry out at a higher temperature than this temperature. In the temperature condition, the forging can be carried out at a high plastic working rate, compared with the cold forging in a temperature range under 300 °C, so that it is possible to also easily produce a product of a complicated shape like the above-mentioned faucet main body 10.

On the other hand, the reason for carrying out forging in a temperature under 600 °C is that the high dimensional accuracy for a product may be obtained. Here, 600 °C can be defined by the temperature range of (melting point + recrystallization temperature)/2 (=(900+300)/2) .

(3) The temperature control of full enclosed forging die 12

The temperature of the full enclosed forging die 12 is maintained at 550±50 °C in one cycle. By controlling the temperature in such narrow temperature range, it is possible to prevent the full enclosed forging die 12 from damage (heat check) caused by thermal cycles, and to lengthen life of the die. And, the tempering temperature, at which the full enclosed forging die 12 for forging is produced, is 570 °C, and because the die temperature does not greatly exceed the tempering temperature during forging such as the hot forging, it is possible to also lengthen the life of the die.

And, since it is a constant temperature processing, in which the temperature of the full enclosed forging die changes in a narrow temperature range of 550±50 °C it is not necessary to carry out plastic working, at such a high speed as hot forging wherein the temperature remarkably lowers during processing. Thus it may be able to slow the speed at which the plastic working of forging material is carried out, in another words, the speed at which the punches 15a, 15b, and 15c are driven forwardly. By the forging at such low plastic working speed, the plastic working rate of the forging material can be increased, and it is possible to carry out the plastic working easily, even if it is a complicated shape like the faucet body 10.

To conduct such temperature control, it may be adopt means for cooling the full enclosed forging die by ventilation, or means for supplying the channel buried in the die with cold water, and means for heating by a heater as to balance heat amount in heating the bar 10A with heat amount which arises during the forging.

(4) Plastic working condition

As mentioned-above, the driving speed of the punches 15a, 15b, and 15c can be reduced, compared with the usual full enclosed die forging, and the speed is preferably set at 50mm/second or less. When the driving speed of these punches is set at 50mm/second or less, the strain rate is small so that the forging can be carried out without causing damage to the forging material utilizing the dynamic recrystallization.

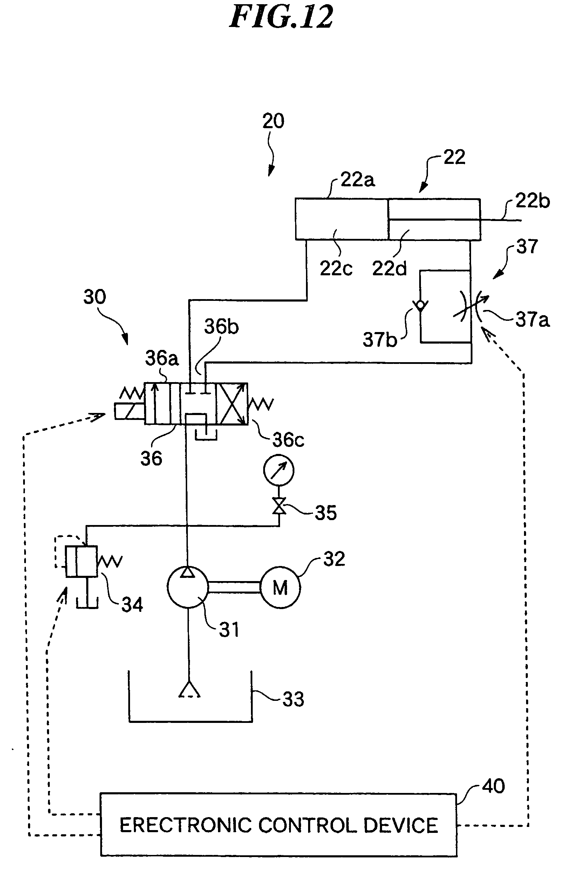

Fig.13 is a schematic configuration view of the full enclosed die forging apparatus 20 for driving the full enclosed forging die 12. In Fig. 12, the full enclosed die forging apparatus 20 is provided with a punch driving cylinder 22, a hydraulic device 30 for driving the punch driving cylinder 22, and an electronic control device 40. The punch driving cylinder 22 is so constituted as to support a piston 22b in a cylinder 22a slidably, and drive the piston 22b by applying and discharging hydraulic pressure to a first chamber 22c and a second chamber 22d. At the piston 22b, the punch 15a (or punch 15b and 15c) is secured respectively.

And, a hydraulic device 30 is provided with a pump 31, a pump motor 32 for driving the pump 31, an oil tank 33, a pressure control valve 34 for controlling the hydraulic pressure from the pump 31, a pressure gauge 35, a switching valve 36 for switching the supply direction of the hydraulic pressure to the cylinder 22, and a flow control valve 37 for controlling the outflow of hydraulic pressure discharged from the punch driving cylinder 22. The switching valve 36 is an electromagnetic three-way valve having the first position 36a, a stop position 36b and a second position 36c. The flow control valve 37 has a flow control division 37a and a check valve 37b.

Now, when the switching valve 36 is in the stop position 36b (the state as shown in the figure), the hydraulic pressure is not supplied to the punch driving cylinder 22 from the pump 31, accordingly it is meintained a condition such that the piston 22b of the punch driving cylinder 22 rested. On the other hand, when the switching valve 36 is switched to the first position 36a, the hydraulic pressure from the pump 31 is supplied to the first chamber 22c of the punch driving cylinder 22, and the hydraulic pressure of the second chamber 22d is communicated to the flow control division 37a of the flow control valve 37 and further returned to the oil tank 33 through the channel of the first position 36a of the switching valve 36. Thus, the piston 22b of the punch driving cylinder 22 is driven forwardly.

And, when the switching valve 36 is switched to the second position 36c, the hydraulic pressure from the pump 31 is supplied to the second chamber 22d of the punch driving cylinder 22 through the check valve 37b of the flow control valve 37, and the hydraulic pressure in the first chamber 22c is returned to the oil tank 33 through the second position 36c of the switching valve 36. Thus, the piston 22b of the punch driving cylinder 22 is driven backwardly.

The pressure force and the speed of the piston 22b of the punch driving cylinder 22 are controlled by sending a drive signal from an electronic control device 40 to the pressure control valve 34 and the flow control valve 37.

That is, the pressure control valve 34 increases and decreases the hydraulic pressure supplied to the punch driving cylinder 22 from the pump 31 by receiving the control signal from the electronic control device 40 to change the channel area. Thus, the force applied by the piston 22b of the punch driving cylinder 22 will be changed.

And, the flow control valve 37, provided with a flow control division 37a and a check valve 37b as above-mentioned, increases and decreases a flow of the pressure oil discharged from the second chamber 22d of the punch driving cylinder 22 by receiving the control signal from the electronic control device 40 at the flow control division 37a to change the channel area. Therefore, the moving speed of the piston 22b of the punch driving cylinder 22 will be changed. As described, changing the pressure force and the speed of the piston 22b allows the moving force and the forging force of the punches 15a, 15b, and 15c to change so that the working condition of the forging material can be controlled. And, the pressure control valve 34 and the flow control division 37a can be controlled to be a predetermined opening, based on the program stored in the electronic control device 40, and also controlled so that the position speed of the piston 22a is detected by an encoder (not be shown), whereby the detection value may become the predetermined value.

This invention is not limited to the above-mentioned embodiment, and it is possible to carry out in various aspects within not deviating from the sprit.

The utilizability in the industry.

The invention, using the forging material which comprising crystal grains of different phases and whose recrystallization temperature is T1 and whose melting point is T2, the above-mentioned forging material is enclosed in the die, while in the temperature range between T1 and $(T1+T2)/2$ , the forging is carried out by a punch for forging material, thus it is able to obtain a complicated shaped forged products with high dimensional accuracy.

**Claims**

1.  A full enclosed die forging method, by utilizing a forging material which comprises crystal grains of different phases and whose recrystallization temperature is T1 and whose melting point is T2, wherein it is characterized that the forging material is enclosed in a die, the forging is carried out by a punch to the forging material in a temperature range not less than T1 and not higher than $(T1+T2)/2$ .

2.  The full enclosed die forging method according to claim 1, wherein a temperature change of the die in one cycle, in which the forging material is produced, is controlled within $\pm 100$ °C.

3.  The full enclosed die forging method according to claim 1 or claim 2, wherein the forging material is a brass having a composition of 54 to 62 wt. % Cu or 38 to 46 wt. % conversion Zn content.

4.  The full enclosed die forging method according to claim 3, wherein the forging material has an average crystal particle size of 15 $\mu$m or less.

5.  The full enclosed die forging method according to claim 4, wherein the forging material comprising the crystal grains of different phases in a temperature range during forging, the different phases including $\alpha$ phase - $\beta$ phase, the ratio of $\beta$ phase being 30 to 80%.

6.  The full enclosed die forging method according to any one of claim 1 to 6, wherein a moving speed of the punch in the forging to forging material is 300mm/second or less.

7.  The full enclosed die forging method according to any one of claim 1 to 6, wherein, when the forging for a forging material is carried out, a concave part is formed at a part of the forging material by the punch to form a hollow cylindrical shape.

8.  The full enclosed die forging method according to any one of claim 1 to 7, wherein, the moving speed of the punch is set variable to carry out forging for the forging material.

9.  The full enclosed die forging method according to any one of claim 1 to 8, wherein a plurality of the punches are so installed as to forge from different directions to the forging material, the punches being driven in a fixed order to carry out forging.

10. A full enclosed die forging apparatus comprising a punch driving means for carrying out forging by a punch to a forging material, wherein a forging material comprising crystal grains of different phases and whose recrystallization temperature is T1 and whose melting point is T2, is full enclosed in a die, it is characterized in that a temperature control means for controlling a temperature range of the forging material not lower than T1 and not higher than $(T1+T2)/2$  is provided.

**11.** The full enclosed die forging apparatus according to claim 10, comprising a die temperature control means for controlling a temperature change of the die in one cycle ±within 100 °C.

**12.** The full enclosed die forging apparatus according to claim 10 or 11, wherein the punch driving means is so constituted to drive the punch at a speed of 300mm/second or less.

**13.** The full enclosed die forging apparatus according to claim 12, wherein the punch driving means is provided with a variable control section for setting the moving speed of the punch variable.

**14.** The full enclosed die forging apparatus according to any one of claim 10 to 13, wherein the punch driving means is so constituted to arrange a plurality of the punches as to forge from different directions to the forging material, the punches being driven in the predetermined order.

**15.** A forged products formed by forging to a forging material, which comprises crystal grains of different phases in a forging temperature and whose recrystallization temperature is T1 and whose melting point is T2, wherein, to the forging material enclosed in a die, forging is carried out by a punch in a temperature range of not lower than T1 and not higher than (T1+T2)/2 .

**16.** The forged products according to claim 15, wherein the product is formed by controlling the temperature change of the die in one cycle, in which the forging material is forged, within ±100 °C.

**17.** The forged products according to claim 15 or 16, wherein the material is a brass of a composition of 54 to 62 wt. % Cu or 38 to 46 wt. % conversion Zn content.

**18.** The forged products according to claim 17, wherein the material has an average crystal particle size of 15 µm or less.

**19.** The forged products according to claim 18, wherein the material includes α phase - β phase, and the ratio of β phase is 30 to 80% in the temperature of the forging.

**20.** The forged products according to any one of claim 15 to 19, by using a punch driven at a moving speed of 300mm/second or less, thereby to be formed by carrying out forging for the forging material by the punch.

**21.** The forged products according to any one of claim 15 to 20, by carrying out forging to the forging material by the punch, thereby to be formed a concave part at a part of the forging material to form a hollow cylindrical shape.

**22.** The forged products according to any one of claim 15 to 21, by using the punch set at a moving speed of the punch variable, thereby to be formed by forging to the forging material by the punch.

**23.** The forged products according to any one of claim 15 to 22, by using a plurality of the punches so arranged as to forge from different directions to the forging material, thereby to be formed by forging to the forging material by the punch in a predetermined order.

## *FIG.1*

10b

10

10a

10c

## *FIG.2*

10

11

10a

10c

10c

# FIG.3

# *FIG.4*

| | COMPORNENT (wt. %) | | | | PHASE RATIO (%) | AVERAGE CRYSTALLINE PARTICLE DIAMETER ($\mu$m) | FORGING TEMPE- RATURE (°C) |
|---|---|---|---|---|---|---|---|
| | Cu | Zn | Sn | Pb | | | |
| SAMPLE1 | 59.0 | 39.2 | 0.3 | 1.5 | $\alpha$ −60 $\beta$ −40 | 10 | 550 |

# *FIG.5*

# FIG.6

STROKE OF THE UPPER DIE MEMBER 13

STROKE OF THE PUNCH 15a

STROKE OF THE PUNCH 15c

t0   t1  t2   t3   t4

# FIG.7

15b

15a

10b

10c          15c

# FIG.8

10a

15a

15b

10b

10Ab

16

16c

15c

# FIG.9

# FIG.10

Cu-Zn TWO-DIMENSIONAL EQUILIBRIUM STATE DIAGRAM

# FIG.11

α PHASE

β PHASE

10 μm

# FIG.12

ERECTRONIC CONTROL DEVICE

## INTERNATIONAL SEARCH REPORT

| | International application No. |
|---|---|
| | PCT/JP98/03517 |

**A. CLASSIFICATION OF SUBJECT MATTER**
Int.Cl⁶ B21J1/06

According to International Patent Classification (IPC) or to both national classification and IPC

**B. FIELDS SEARCHED**

Minimum documentation searched (classification system followed by classification symbols)
Int.Cl⁶ B21J1/06, B21J5/02

Documentation searched other than minimum documentation to the extent that such documents are included in the fields searched

| Jitsuyo Shinan Koho | 1926–1996 | Toroku Jitsuyo Shinan Koho | 1994–1998 |
| Kokai Jitsuyo Shinan Koho | 1971–1998 | Jitsuyo Shinan Toroku Koho | 1996–1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 50-75155, A (Kobe Steel, Ltd.), 20 June, 1975 (20. 06. 75) (Family: none) | 1-23 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 27 October, 1998 (27. 10. 98) | 4 November, 1998 (04. 11. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)